# FASCICULE DE BREVET EUROPEEN

(11) **EP 3 715 529 B1**
(45) Date de publication et mention de la délivrance du brevet: **28.07.2021**
(21) Numéro de dépôt: 20160442.8
(22) Date de dépôt: 02.03.2020
(51) Int. Cl.: E01B 26/00, F16M 13/02, G01C 9/02, E01B 35/00

(54) **DISPOSITIF POUR LIAISON MÉCANIQUE ET/OU ÉLECTRIQUE PAR EFFET MAGNÉTIQUE**
VORRICHTUNG ZUR MECHANISCHEN UND/ODER ELEKTRISCHEN VERBINDUNG ÜBER MAGNETEFFEKT
DEVICE FOR MECHANICAL AND/OR ELECTRICAL CONNECTION BY MAGNETIC EFFECT

(30) Priorité: 25.03.2019 FR 1903038
(43) Date de publication de la demande: 30.09.2020
(73) Titulaire: 4NRJ, 41260 La Chaussée-Saint-Victor (FR)
(72) Inventeur: GASSELIN, Benoît, 41000 Blois (FR)
(74) Mandataire: Lequien, Philippe

(56) Documents cités:
- CN-U- 205 821 913
- FR-A1- 2 992 664

## Description

Le domaine de l'invention est celui de la conception et de la fabrication des équipements de maintenance pour les installations ferroviaires.

Plus précisément, l'invention concerne un dispositif pour liaison mécanique et/ou électrique par effet magnétique entre un support ferromagnétique et un élément à lier au support ferromagnétique.

Lors de la maintenance des voies ferrées notamment, des ouvriers agissent sur les voies ferrées par exemple en fixant ou appliquant des appareils de mesure sur les structures (arches métalliques, piliers de ponts métalliques, poteaux, ou encore directement sur les rails).

Pour cela, les ouvriers qui se trouvent au sol peuvent être amenés à manipuler, via des perches, des éléments à accrocher en hauteur.

Les interventions de maintenance des installations ferroviaires peuvent par exemple consister à mesurer la déformation d'un ouvrage, par exemple une arche métallique ou un pilier de pont, au cours du temps.

Dans ce cas, un inclinomètre peut être positionné sur un montant de l'arche ou sur le pilier, et y être solidarisé de manière permanente.

En outre, une telle solidarisation peut être faite de manière temporaire, notamment pour mesurer l'inclinaison lorsque des caténaires sont remplacées, de sorte que la tension des caténaires n'entraîne pas une déformation élastique des structures qui les supportent.

Dans ce cas, l'ouvrier qui est au sol se saisit d'une perche au bout de laquelle est monté un support sur lequel se trouve l'inclinomètre.

Depuis le sol, l'ouvrier essaie donc de positionner l'inclinomètre en hauteur, sur le montant de l'arche métallique ou le pilier.

La fixation de l'inclinomètre est par exemple réalisée grâce à un dispositif qui comprend un aimant coopérant avec l'arche métallique par effet magnétique.

Pour cela, l'ouvrier approche le dispositif du montant de l'arche et, par attraction magnétique, l'aimant et son champ magnétique viennent interagir avec le montant ou le pilier et son champ magnétique, de sorte que le dispositif s'accroche sur le montant.

Toutefois, une telle façon de procéder présente des inconvénients.

D'une part, la coopération magnétique réalisée en hauteur par rapport à la position de l'ouvrier peut générer un défaut de positionnement.

En effet, la position du dispositif sur la perche peut générer un poids important à manipuler pour l'ouvrier, celui-ci pouvant alors rencontrer des difficultés pour positionner à l'endroit souhaité le dispositif, ce qui peut provoquer un mauvais positionnement de l'inclinomètre.

Par ailleurs, la présence de vent peut également gêner le positionnement de l'inclinomètre puisque le vent, généralement plus puissant en hauteur qu'au sol, peut faire bouger intempestivement l'inclinomètre en bout de perche lors de sa mise en place par l'ouvrier.

D'autre part, lorsque le dispositif est solidarisé sur le montant par attraction magnétique, un phénomène de vibrations dans le montant peut tendre à faire déplacer le dispositif contre la volonté de l'ouvrier.

En effet, avec le passage de trains à proximité ou de résonnances dues aux travaux réalisés sur les voies ferrées, les vibrations peuvent provoquer de légers déplacements du dispositif en écartant de manière très rapide le dispositif du montant ou du pilier. Le dispositif chute alors sous l'effet de son propre poids.

Ainsi, il peut être nécessaire à un ouvrier de vérifier chaque jour, voire plusieurs fois par jour, la bonne position des appareils de mesure et, le cas échéant, repositionner correctement les appareils.

Cela réduit alors l'efficacité des interventions et provoque un coût de maintenance supplémentaire.

Les interventions de maintenance des installations ferroviaires peuvent également consister à remplacer des rails ou portions de rails. Pour que les ouvriers travaillent en toute sécurité, il est nécessaire de contrôler la présence d'électricité dans un rail, par exemple en utilisant un voltmètre pour détecter la présence de courant dans le rail.

Un tel voltmètre est positionné manuellement par un ouvrier sur le rail, de sorte à détecter la présence de courant par l'intermédiaire d'une surface et d'un échange électrique entre l'appareil de mesure et le rail.

Toutefois, la détection de courant peut être faussée pour diverses raisons.

En effet, les rails étant utilisés dans un milieu extérieur, ils sont soumis aux intempéries et peuvent présenter une couche de corrosion plus ou moins importante selon leur ancienneté et/ou leur fréquence d'utilisation.

Ainsi, en positionnant l'appareil de mesure sur le rail, la couche de corrosion peut agir comme un isolant ne laissant pas passer le courant électrique entre le rail et l'appareil de mesure.

L'ouvrier peut alors, de manière erronée, déduire que le rail n'est pas alimenté et donner un ordre de saisie et de déplacement du rail à d'autres ouvriers.

Dans le pire des cas, lorsque le rail est alimenté et que les ouvriers disposent d'outils conducteurs, une électrocution des ouvriers peut être déplorée. En d'autres termes, lorsque la présence d'électricité dans les rails n'est pas détectée, la santé et la sécurité des ouvriers peuvent être mises en péril.

CN-U-205821913 montre un dispositif selon le préambule de la revendication 1.

L'invention a notamment pour objectif de pallier les inconvénients de l'art antérieur.

Plus précisément, l'invention a pour objectif de proposer un dispositif qui permette d'assurer une liaison mécanique robuste entre le dispositif et l'élément ferromagnétique sur lequel le dispositif est monté.

L'invention a également pour objectif de fournir un tel dispositif qui permette une liaison électrique sûre entre l'élément monté sur le dispositif et le support ferromagnétique.

L'invention a en outre pour objectif de fournir un tel dispositif qui permette un montage simple et réversible d'un élément sur un support ferromagnétique.

Ces objectifs, ainsi que d'autres qui apparaîtront par la suite, sont atteints grâce à l'objet de la revendication 1.

Un tel dispositif permet ainsi de réaliser une liaison mécanique et électrique fiable. En effet, lorsque le ou les aimants se déplacent dans le logement et viennent impacter la face ou la paroi de contact, le choc des aimants sur la paroi de contact engendre une force qui tend à faire pénétrer les pointeaux dans le support ferromagnétique.

Ainsi, lorsque le dispositif a pour fonction de solidariser un élément tel qu'un inclinomètre sur un montant, la perforation du support ferromagnétique par les pointeaux crée, en plus de la liaison magnétique entre le ou les aimants et le support ferromagnétique, un point d'accroche qui empêche le glissement du dispositif même en présence de vibrations dans le support ferromagnétique.

L'inclinomètre reste donc en position indépendamment des conditions, c'est-à-dire de la présence ou non de vibrations et de la présence ou non de vent.

Dans le cas de la détection d'un courant électrique, l'impact du ou des aimants sur la paroi de contact provoque la pénétration des pointeaux qui traversent alors la couche de corrosion pour arriver au contact d'une surface saine du support ferromagnétique, par exemple d'un rail, et donc permettre la liaison électrique du support ferromagnétique en courant électrique.

De préférence, la paroi de fond du boîtier est magnétique et forme les moyens de retenue du ou des aimants permanents.

Ainsi, lorsque le dispositif est écarté du support ferromagnétique, les aimants sont immobilisés contre la paroi de fond du boîtier, cela permettant une manipulation aisée du dispositif et donc un positionnement précis ou un retrait facilité de l'élément par rapport au support ferromagnétique.

Avantageusement, la paroi de contact est amagnétique.

La caractéristique amagnétique de la paroi de contact permet de pouvoir positionner précisément le dispositif sans que la paroi de contact ne gêne le positionnement par attraction magnétique avec le support ferromagnétique. En effet, par ses caractéristiques amagnétiques, la paroi de contact n'est pas attirée par le support ferromagnétique si les aimants permanents ne sont pas à son contact.

Ainsi, l'utilisation du dispositif et le positionnement de l'élément sur le support ferromagnétique sont facilités.

Selon un mode de réalisation particulier, le boîtier comprend deux logements, au moins un aimant permanent étant présent dans chaque logement.

Il est ainsi possible de réaliser une fixation et un retrait du dispositif sur le support ferromagnétique de manière douce, c'est-à-dire non brutal.

En effet, en positionnant un bord seulement de la paroi de contact contre le support ferromagnétique, chaque aimant sera attiré de manière progressive en direction du support ferromagnétique à mesure que l'intégralité de la paroi de contact se rapprochera du support ferromagnétique. En d'autres termes, les aimants permanents se déplacent les uns après les autres dans leur logement, la mise en mouvement de chacun des aimants permanents étant toutefois réalisée de manière rapide pour générer une force d'impact assez importante pour permettre la pénétration des pointeaux dans le support ferromagnétique.

Avantageusement, le boîtier comprend des moyens de réglage d'une course de translation du ou des aimants permanents.

En réglant la course de translation du ou des aimants permanents, il est possible de gérer et régler la puissance de l'impact du ou des aimants contre la paroi de contact.

Il est donc possible de s'assurer de la bonne pénétration des pointeaux dans le support ferromagnétique sans pour autant abîmer ce dernier.

De préférence, le ou les aimants permanents comprennent au moins deux disques en matériau magnétique superposés l'un sur l'autre et montés dans un coulisseau.

L'utilisation de plusieurs disques magnétiques permet d'ajuster la puissance de l'attraction magnétique du ou des aimants permanents avec le support ferromagnétique.

Par ailleurs, la présence du coulisseau permet d'assurer au moins partiellement un guidage du ou des aimants permanents dans son logement.

Enfin, le coulisseau assure également la retenue de chacun des disques magnétiques les uns par rapport aux autres, de sorte que lors des différentes utilisations du dispositif, l'attraction magnétique reste constante.

Le coulisseau présente préférentiellement un alésage destiné à coopérer avec des moyens de guidage solidaires du boîtier.

La coopération entre les moyens de guidage et l'alésage permet ainsi de réaliser un déplacement uniquement en translation du ou des aimants permanents, de sorte que l'impact du ou des aimants permanents sur la paroi de contact soit constant et conforme au réglage lié au choix des aimants permanents.

Selon un mode préférentiel de réalisation, les moyens de guidage se présentent sous la forme d'un cylindre faisant saillie de la paroi de fond à l'intérieur du ou des logements.

La coopération entre le cylindre et l'alésage permet de réaliser une translation uniquement du ou des aimants permanents. Cela facilite donc la création de l'impact et la bonne perforation du support ferromagnétique par les pointeaux.

De préférence, le boîtier intègre des moyens de liaison électrique pour relier les pointeaux à l'élément.

Cela est particulièrement avantageux lorsque l'élément est un voltmètre permettant de détecter la présence de courant dans un rail formant le support ferromagnétique.

En effet, par la simple mise en place du dispositif, il est possible de savoir quasiment instantanément si le rail est alimenté électriquement ou non.

Avantageusement, le boîtier comprend des moyens d'emmanchage d'une perche de manipulation.

Ces moyens d'emmanchage d'une perche de manipulation permettent à un ouvrier situé au niveau des rails, c'est-à-dire au niveau du sol, de pouvoir facilement positionner et solidariser le dispositif à un support ferromagnétique tel qu'un montant d'une arche métallique.

Pour cela, le boîtier peut, préférentiellement, présenter une extension s'étendant depuis la paroi de fond à l'opposé de la paroi de contact, les moyens d'emmanchage étant solidaires de l'extension.

Une telle configuration assure que les moyens d'emmanchage soient écartés de la paroi de contact.

Cet écartement permet alors de pouvoir, via la perche, créer un effet de bras de levier qui facilite la mise en place et le retrait du dispositif sur le support ferromagnétique, notamment lorsque celui-ci est réalisé en hauteur.

D'autres caractéristiques et avantages de l'invention apparaîtront plus clairement à la lecture de la description suivante de modes de réalisation préférentiels de l'invention, donnés à titre d'exemples illustratifs et non limitatifs, et des dessins annexés parmi lesquels :
- la figure 1 est une vue en perspective d'un dispositif selon l'invention, selon un premier mode de réalisation ;
- la figure 2 est une vue en coupe transversale d'un dispositif selon l'invention, selon le premier mode de réalisation ;
- la figure 3 est une vue en coupe du dispositif selon l'invention, montrant sa mise en position sur un support ferromagnétique, selon une première étape ;
- la figure 4 est une vue en coupe du dispositif selon l'invention, montrant sa mise en position sur un support ferromagnétique, selon une deuxième étape ;
- la figure 5 est une vue en coupe du dispositif selon l'invention, montrant sa mise en position sur un support ferromagnétique, selon une troisième étape ;
- la figure 6 est une vue en perspective d'un dispositif selon l'invention, selon un deuxième mode de réalisation ;
- la figure 7 est une vue en coupe longitudinale du dispositif selon l'invention, selon le deuxième mode de réalisation.

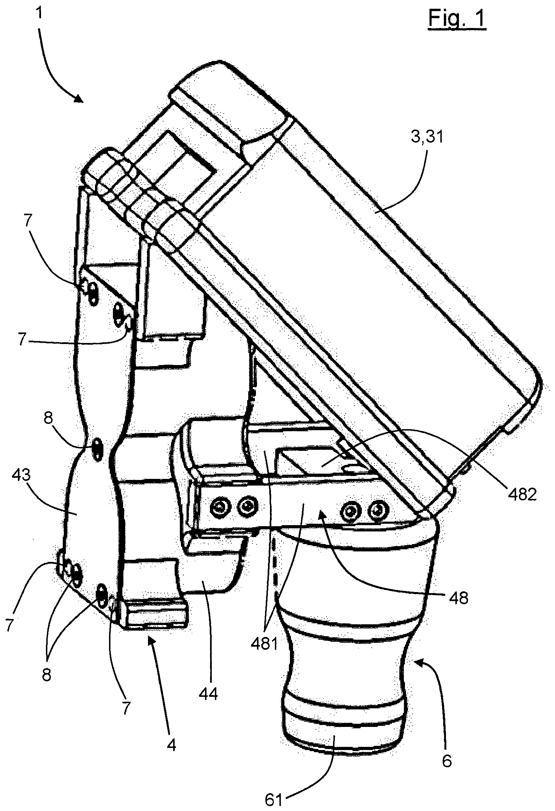

La figure 1 illustre un dispositif 1, selon l'invention, pour une liaison mécanique et/ou électrique par effet magnétique entre un support ferromagnétique 2 et un élément 3 à lier au support ferromagnétique 2.

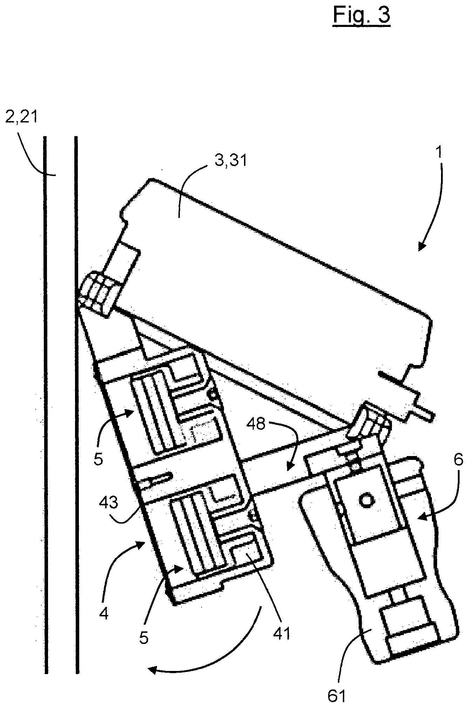

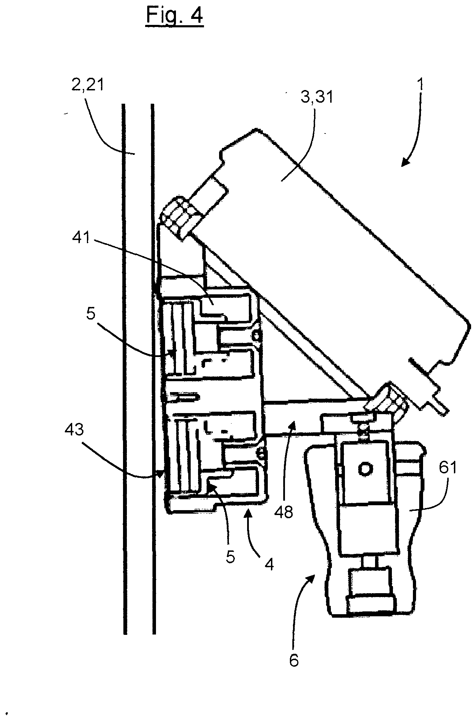

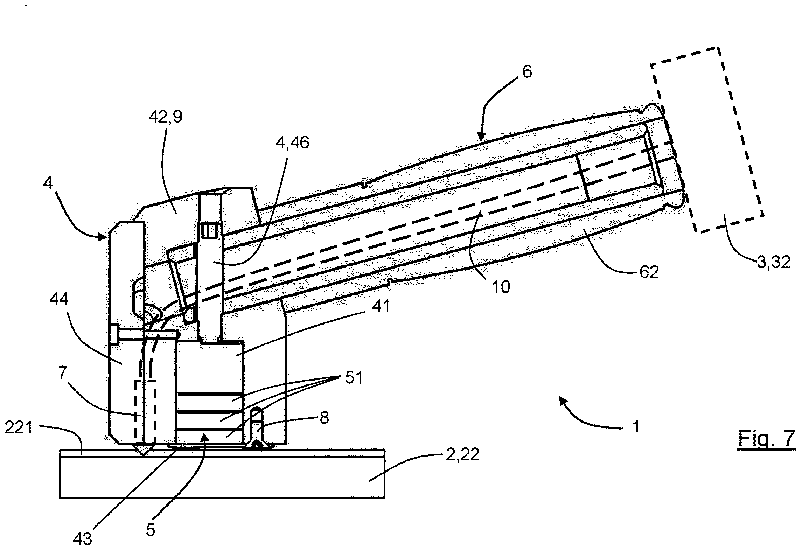

Le support ferromagnétique 2 peut être un montant 21 métallique d'une arche métallique, tel qu'illustré sur les figures 3 à 5, ou encore un rail 22 tel que schématiquement illustré sur la figure 7.

L'élément 3 peut quant à lui être un inclinomètre 31 destiné à mesurer l'inclinaison d'un montant 21 par exemple, tel qu'illustré sur les figures 1 et 3 à 5, ou un voltmètre 32 destiné à détecter la présence d'un courant électrique dans un rail 22, tel qu'illustré sur la figure 7. Le cas échéant, l'intensité du courant électrique dans le rail peut être mesuré à l'aide du voltmètre 31.

Le dispositif 1 selon l'invention comprend :
- un boîtier 4 ;
- au moins un aimant permanent 5 ;
- des moyens de manipulation 6.

Le boîtier 4 qui est destiné à supporter l'élément 3, présente au moins un logement 41 s'étendant entre une paroi de fond 42 et une paroi de contact 43.

Plus précisément, le boîtier 4 comprend un corps formé par une ceinture périphérique 44 et la paroi de fond 42.

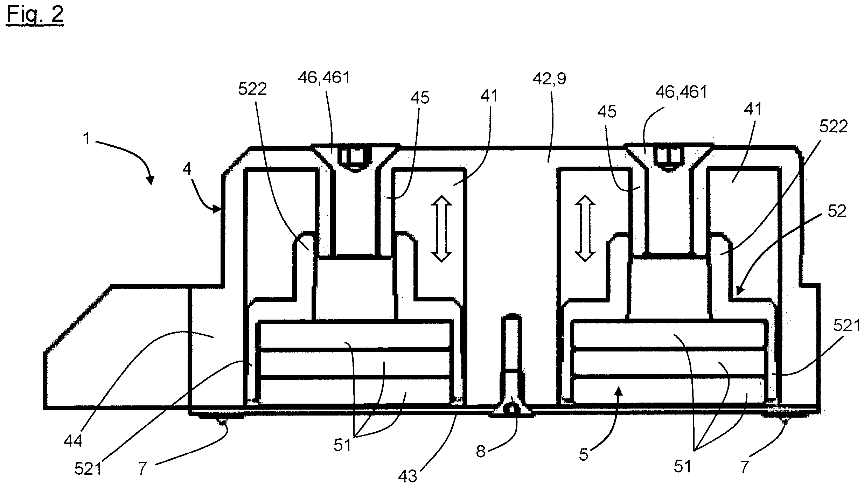

Selon une forme de réalisation illustrée sur les figures 2 à 5 et 7, la paroi de fond 42 et la ceinture périphérique 44 forment un ensemble monobloc.

En variante, la ceinture périphérique 44 et la paroi de fond 42 sont deux éléments distincts assemblés l'un à l'autre par des moyens d'assemblage ad hoc.

Le ou les logements 41 sont complètement définis entre d'une part la paroi de fond 42 et la paroi de contact 43 et délimités latéralement par la ceinture périphérique 44.

La paroi de contact 43 est destinée à venir au contact d'un support ferromagnétique 2 tel qu'expliqué ci-après.

Le boîtier 4 comprend également des moyens de guidage 45 de l'aimant permanent dans son logement. Ces moyens de guidage 45 se présentent avantageusement sous la forme d'un cylindre faisant saillie de la paroi de fond 42 à l'intérieur chacun des logements 41.

Le ou les aimants permanents 5 comprennent avantageusement au moins deux disques 51 en matériau magnétique superposés l'un sur l'autre et monté dans un coulisseau 52.

Selon une première forme de réalisation illustrée que les figures 2 à 5, le ou les aimants permanents 5 comprennent trois disques 51 en matériau magnétique superposés les uns sur les autres pour former un aimant permanent puissant.

Le coulisseau 52, tel qu'illustré sur les figures 2 à 5, comprend un fourreau 521 recevant l'ensemble des disques 51 et un alésage 522 s'étendant au-dessus des disques 51. Le fourreau 521 et l'alésage 522 forment entre eux un épaulement.

L'alésage 522 du coulisseau 52 coopère avec les moyens de guidage 45 pour permettre de guider uniquement en translation le déplacement du ou des aimants permanents 5 dans leur logement 41.

Le boîtier 4 comprend en outre des moyens de réglage 46 d'une course de translation du ou des aimants permanents 5.

Tel qu'illustré sur la figure 2, ces moyens de réglage 46 se présentent sous la forme d'une vis 461 traversant conjointement la paroi de fond 42 et les moyens de guidage 45 pour déboucher dans le logement 41.

Ainsi, en réglant la profondeur de pénétration de la vis 461 dans le logement 41, il est possible de régler la course du ou des aimants permanents 5 dans leur logement 41, par exemple en la limitant. Le ou les aimants viennent alors buter contre la paroi de contact 43 ou contre la vis 461 des moyens de réglage 46 à chaque extrémité de leur course.

Avantageusement, la paroi de fond 42 est réalisée dans un matériau magnétique.

Lorsque le boîtier 4 comprend une paroi de fond 42 et une ceinture périphérique 44 formant un ensemble monobloc, l'ensemble monobloc est alors réalisé dans un matériau magnétique.

La paroi de contact 43 est quant à elle réalisée dans un matériau amagnétique, c'est-à-dire qui n'est pas attiré par un champ magnétique du support ferromagnétique 2.

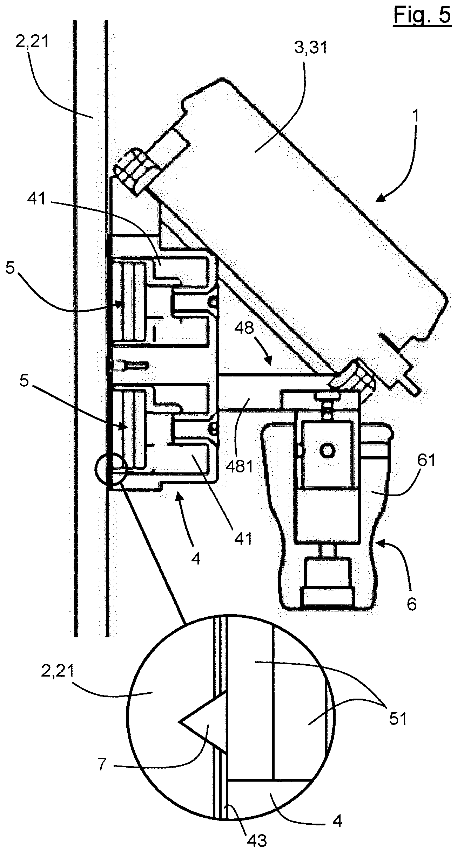

Tel qu'illustré sur les figures 1 et 2, sur le médaillon de détail de la figure 5 et sur la figure 7, la paroi de contact 43 porte des pointeaux 7 faisant saillie de celle-ci vers l'extérieur du dispositif 1, et donc des logements 41. Tel qu'expliqué ci-après, les pointeaux sont destinés à perforer le support ferromagnétique 2.

La paroi de contact 43 est avantageusement solidarisée à la ceinture périphérique 44 au moyen de vis 8. Cela permet de pouvoir désolidariser aisément la paroi de contact 43 de la ceinture périphérique 44, notamment pour des opérations de maintenance du ou des aimants permanents 5.

Enfin, le dispositif 1 comprend des moyens de retenue 9 du ou des aimants permanents 5 contre la paroi de fond 42.

Ces moyens de retenue 9 sont formés avantageusement par la paroi de fond 42 elle-même, et plus particulièrement par son matériau magnétique.

Ainsi, en l'absence de champ magnétique, le ou les aimants permanents 5 sont dans une position dite de repos, c'est-à-dire que le ou les aimants permanents 5 sont accolés à la paroi de fond 42.

Selon un premier mode de réalisation de l'invention, illustré sur les figures 1 à 5, le boîtier 4 comprend deux logements 41 à l'intérieur desquels est monté un aimant permanent 5.

Tel qu'illustré sur la figure 1, les pointeaux 7 sont situés aux quatre coins de la paroi de contact 43.

Les moyens de manipulation 6 se présentent quant à eux sous la forme de moyens d'emmanchage 61, par exemple d'un manchon solidaire du boîtier 4 et destiné à coopérer avec l'extrémité d'une perche de manipulation (non illustrée sur les figures) pour permettre à un utilisateur positionné au niveau des rails, de pouvoir manipuler et solidariser un dispositif 1 sur un montant 21, notamment sur une partie haute d'un montant 21 d'une arche métallique.

Plus précisément, tel que cela est illustré sur les figures 1 et 3 à 5, le manchon des moyens d'emmanchage 61 est fixé ou solidarisé sur le boîtier 4 via une extension 48 s'étendant depuis la paroi de fond 42 à l'opposé de la paroi de contact 43.

Cette extension 48 se présente par exemple sous la forme de deux bras 481 métalliques solidaires de la ceinture périphérique 44 du boîtier 4 et supportant, entre eux, une platine 482 à laquelle le manchon est vissé.

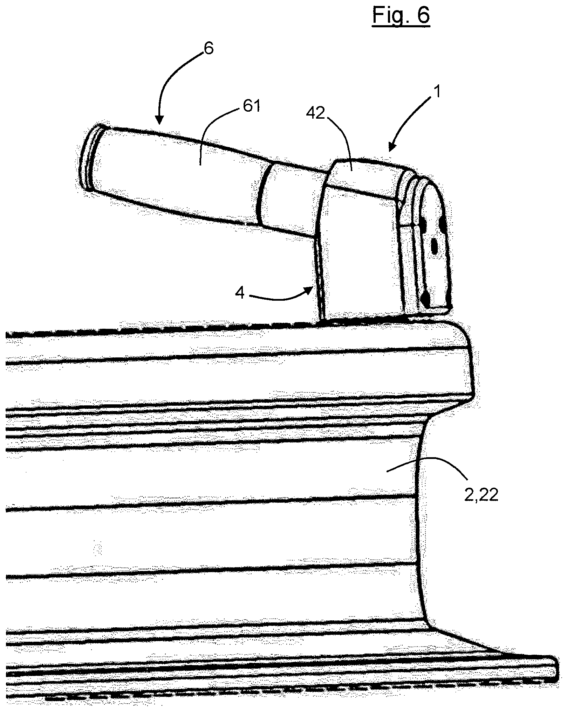

Selon un deuxième mode de réalisation illustrée sur les figures 6 et 7, le boîtier 4 ne comprend qu'un seul logement 41 et un seul aimant permanent 5 qui est formé uniquement de trois disques 51 en matériau magnétique, collés les uns aux autres.

L'aimant permanent 5 est monté dans le logement 41 et guidé en translation par coopération de forme avec le logement 41. Les moyens de réglage 46 de la course en translation de l'aimant permanent peuvent être utilisés pour déterminer la course de l'aimant permanent en fonction du besoin.

Dans ce deuxième mode de réalisation, tel que cela est illustré sur la figure 7, les pointeaux 7 sont reliés par des moyens de liaison électrique à l'élément, en l'occurrence un voltmètre, pour permettre la détection sur un rail, tel qu'illustré sur les figures 6 et 8, de la présence d'un courant électrique.

Dans ce deuxième mode de réalisation, les moyens de manipulations 6 sont formés par un manche 62 s'étendant depuis la ceinture périphérique 44 et/ou de la paroi de fond 42 du boîtier 4.

Ce manche 62 est facilement manipulable par un ouvrier.

De préférence, le manche 62 est soit réalisé dans un matériau non conducteur d'électricité, soit recouvert d'une couche d'isolant électrique, par exemple de caoutchouc.

En utilisation, le dispositif 1 est manipulé comme suit.

Selon le premier mode de réalisation illustré sur les figures 1 à 5, le dispositif 1 est solidarisé à une perche de manipulation par insertion d'un embout de la perche de manipulation dans les moyens d'emmanchage 61.

Un ouvrier peut alors élever le dispositif 1 au-dessus de lui grâce à la perche de manipulation et positionner le dispositif 1 sur un montant 21 d'une arche métallique.

Dans un premier temps, tel qu'illustré sur la figure 3, l'ouvrier positionne une bordure supérieure du boîtier 4 contre le support ferromagnétique 2, c'est-à-dire le montant 21, de sorte que la paroi de contact 43 forme un angle non nul avec le support ferromagnétique 2.

Dans un second temps, l'ouvrier fait pivoter le dispositif 1 pour rapprocher la paroi de contact 43 du support ferromagnétique 2, et donc réduire l'angle entre le support ferromagnétique 2 et la paroi de contact 43 à une valeur proche de zéro.

Lors de cette rotation, les aimants permanents 5 sont magnétiquement attirés par le support ferromagnétique 2 et se déplacent dans le logement 41 pour venir en direction de la paroi de contact 43.

En référence à la figure 5, la paroi de contact 43 est plaquée contre le support ferromagnétique 2 par la force magnétique et notamment par l'impact des aimants permanents 5 sur la paroi de contact 43.

Les pointeaux 7 perforent alors le support ferromagnétique 2 de sorte à créer une empreinte dans celui-ci.

Selon une première variante, lors de l'impact des aimants permanents 5 sur la paroi de contact 43, les pointeaux 7 sont tous au contact du support ferromagnétique 2, c'est-à-dire que l'angle formé entre le support ferromagnétique 2 et la paroi de contact 43 est nul. Dans ce cas, l'impact des aimants permanents 5 sur la paroi de contact 43 provoque la pénétration simultanée de chacun des pointeaux 7 dans le support ferromagnétique 2.

Selon une deuxième variante, lors de l'impact des aimants permanents 5 sur la paroi de contact 43, seuls les pointeaux 7 supérieurs sont au contact du support ferromagnétique 2, ce qui provoque leur pénétration directe dans le support ferromagnétique 2. La puissance de l'impact et l'attraction magnétique entre les aimants permanents 5 et le support ferromagnétique 2 engendrent alors la venue de la paroi de contact 43 au contact du support ferromagnétique 2, ce qui provoque la pénétration des pointeaux 7 dans le support ferromagnétique 2, au niveau de la partie basse du dispositif 1.

Tel que cela est illustré sur la figure 5, le dispositif 1 est correctement solidarisé au support ferromagnétique 2, ici un montant 21, et ne peut glisser vers le bas par son propre poids, grâce à la pénétration des pointeaux 7 dans le support ferromagnétique 2 et à l'attraction magnétique.

L'élément 3 monté sur le dispositif 1 dans ce premier mode de réalisation est un inclinomètre 31 qui permet de mesurer la déformation du montant 21. En utilisation, malgré la présence de vibrations dues au passage de trains à proximité, la présence de vent qui tend à décrocher le dispositif 1 ou encore le poids du dispositif 1 et de l'élément 3, le dispositif 1 reste solidement accroché sur le montant 21.

Selon le deuxième mode de réalisation, le dispositif 1 est monté ou utilisé sur le rail 22 par coopération d'un bord inférieur de la paroi de contact 43 dépourvu de pointeaux 7.

L'ouvrier applique alors à un effort de rotation pour faire pivoter la paroi de contact 43 par rapport au rail 22, de sorte que les pointeaux 7 soient au contact du rail 22.

Par attraction magnétique, les aimants passent de leur position de repos (contre la paroi de fond 42) à une position active, illustrée sur la figure 7, dans laquelle ils impactent la paroi de contact 43, provoquant alors la pénétration des pointeaux 7 dans le rail 22.

Dans le cas d'un rail 22 recouvert d'une couche de corrosion 221, tel qu'illustré sur la figure 7, la pénétration des pointeaux 7 se fait au travers de la couche de corrosion 221 jusqu'à ce que ceux-ci viennent au contact d'une partie saine du rail 22, c'est-à-dire d'une partie non corrodée.

Selon ce second mode de réalisation, l'élément 3 porté par le dispositif est un voltmètre 31 relié aux pointeaux 7 par les moyens de liaison électrique 10.

Ainsi, lorsque le dispositif 1 est solidarisé mécaniquement au support ferromagnétique 2, ici le rail 22, les pointeaux 7 sont au contact du rail 22 et permettent au voltmètre 31 de détecter la présence ou non d'un courant électrique circulant dans le rail 22.

Pour retirer le dispositif 1 du support ferromagnétique 2, l'opérateur agit en sens inverse, c'est-à-dire qu'il crée un angle entre la paroi de contact 43 et le support ferromagnétique 2, de sorte que l'attraction magnétique entre le ou les aimants permanents 5 et le support ferromagnétique 2 diminue et que l'attraction entre le ou les aimants permanents 5 et la paroi de fond 42 soit assez puissante pour positionner le ou les aimants permanents 5 dans leur position de repos.

Ainsi, l'opérateur peut, sans efforts, retirer et écarter le dispositif 1 et donc l'élément 3 du support ferromagnétique 2.

Le dispositif 1 selon l'invention permet ainsi de fiabiliser la liaison mécanique et/ou la liaison électrique entre le dispositif 1 et le support ferromagnétique 2 d'une part, et entre l'élément 3 et le support ferromagnétique 2 d'autre part.

A titre indicatif, selon le premier mode de réalisation illustré sur les figures 1 à 5, les valeurs suivantes sont observées :
- l'effort d'attraction entre le ou les éléments permanents 5 et les moyens de retenue 9 est compris entre 5 daN et 15 daN, et est de préférence égal à 10 daN ;
- l'effort d'attraction entre le support ferromagnétique 2 et le ou les éléments permanents 5 est compris entre 68 daN et 72 daN, et est de préférence égal à 70 daN, lorsque le ou les aimants permanents 5 ont impacté la paroi de contact 43 ;
- la course du ou des aimants permanents 5 dans le logement 41 est comprise entre 8 mm et 10 mm ;
- l'impact du ou des aimants permanents 5 sur la paroi de contact 43 est compris entre 2,8 joules et 3,2 joules, et est de préférence égal à 3 joules.

A titre indicatif, selon le deuxième mode de réalisation illustré sur les figures 6 et 7, les valeurs suivantes sont observées :
- l'effort d'attraction entre le ou les éléments permanents 5 et les moyens de retenue 9 est compris entre 0,5 daN et 1,5 daN, et est de préférence égal à 1 daN ;
- l'effort d'attraction entre le support ferromagnétique 2 et le ou les éléments permanents 5 est compris entre 8 daN et 12 daN, et est de préférence égal à 10 daN, lorsque le ou les aimants permanents 5 ont impacté la paroi de contact 43 ;
- la course du ou des aimants permanents 5 dans le logement 41 est comprise entre 8 mm et 12 mm, et est de préférence égale à 10 mm ;
- l'impact du ou des aimants permanents 5 sur la paroi de contact 43 est compris entre 0,2 joules et 0,6 joules, et est de préférence égal à 0,4 joules.

## Revendications

1. Dispositif (1) pour liaison mécanique et/ou électrique par effet magnétique entre un support ferromagnétique (2) et un élément (3) à lier au support ferromagnétique (2), le dispositif (1) comprenant :
- au moins un aimant permanent (5) ;
- un boîtier (4) portant l'élément (3) et logeant le ou les aimants permanents (5) ;
le boîtier (4) incluant au moins un logement (41) s'étendant entre une paroi de fond (42) et une paroi de contact (43) destinée à venir au contact du support ferromagnétique (2),
le ou les aimants permanents (5) étant mobiles en translation dans le ou les logements (41) entre la paroi de fond (42) et la paroi de contact (43), le boîtier (4) comprenant des moyens de retenue (9) du ou des aimants permanents (5) contre la paroi de fond (42), **caractérisé en ce que** les moyens de retenue (9) présentent une attraction magnétique du ou des aimants permanents (5), pour libérer le ou les aimants permanents (5) par attraction magnétique du ou des aimants permanents (5) par le support ferromagnétique (2),
et **en ce que** la paroi de contact (43) présente des pointeaux (7) faisant saillie vers l'extérieur du logement (41), les pointeaux (7) étant destinés à perforer le support ferromagnétique (2) par impact du ou des aimants permanents (5) sur la face de contact (43).

2. Dispositif (1) selon la revendication 1, **caractérisé en ce que** la paroi de fond (42) du boîtier (4) est magnétique et forme les moyens de retenue (9) du ou des aimants permanents (5).

3. Dispositif (1) selon la revendication 1 ou la revendication 2, **caractérisé en ce que** la paroi de contact (43) est amagnétique.

4. Dispositif (1) selon l'une quelconque des revendications précédentes, **caractérisé en ce que** le boîtier (4) comprend deux logements (41), au moins un aimant permanent (5) étant présent dans chaque logement (41).

5. Dispositif (1) selon l'une quelconque des revendications précédentes, **caractérisé en ce que** le boîtier (4) comprend des moyens de réglage (46) d'une course de translation du ou des aimants permanents (1).

6. Dispositif (1) selon l'une quelconque des revendications précédentes, **caractérisé en ce que** le ou les aimants permanents (5) comprennent au moins deux disques (51) en matériaux magnétiques superposés l'un sur l'autre et montés dans un coulisseau (52).

7. Dispositif (1) selon la revendication précédente, **caractérisé en ce que** le coulisseau (52) présente un alésage (522) destiné à coopérer avec des moyens de guidage (45) solidaires du boîtier (4).

8. Dispositif (1) selon la revendication précédente, **caractérisé en ce que** les moyens de guidage (45) se présentent sous la forme d'un cylindre faisant saillie de la paroi de fond (42) à l'intérieur du ou des logements (41).

9. Dispositif (1) selon l'une quelconque des revendications précédentes, **caractérisé en ce que** le boîtier (4) intègre des moyens de liaison électrique (10) pour relier les pointeaux (7) à l'élément (3).

10. Dispositif (1) selon l'une quelconque des revendications précédentes, **caractérisé en ce que** le boîtier (4) comprend des moyens d'emmanchage (61) d'une perche de manipulation.

11. Dispositif (1) selon la revendication précédente, **caractérisé en ce que** le boîtier (4) présente une extension (48) s'étendant depuis la paroi de fond (42) à l'opposé de la paroi de contact (43), les moyens d'emmanchage (61) étant solidaires de l'extension (48).

## Patentansprüche

1. Vorrichtung (1) zur mechanischen und/oder elektrischen Verbindung durch Magnetwirkung zwischen einem ferromagnetischen Träger (2) und einem Element (3), das mit dem ferromagnetischen Träger (2) verbunden werden soll, wobei die Vorrichtung (1) umfasst:
- mindestens einen Permanentmagneten (5);
- ein Gehäuse (4), das das Element (3) trägt und den oder die Permanentmagneten (5) beherbergt;
wobei das Gehäuse (4) mindestens eine Aufnahme (41) einschließt, die sich zwischen einer Bodenwand (42) und einer Kontaktwand (43) erstreckt, welche dazu bestimmt ist, mit dem ferromagnetischen Träger (2) in Kontakt zu kommen, wobei der oder die Permanentmagneten (5) in der oder den Aufnahme(n) (41) zwischen der Bodenwand (42) und der Kontaktwand (43) verschiebebeweglich sind, wobei das Gehäuse (4) Mittel (9) zum Halten des oder der Permanentmagneten (5) an der Bodenwand (42) umfasst, **dadurch gekennzeichnet, dass** die Haltemittel (9) eine magnetische Anziehung des oder der Permanentmagneten (5) aufweisen, um den oder die Permanentmagneten (5) durch magnetische Anziehung des oder der Permanentmagneten (5) durch den ferromagnetischen Träger (2) zu lösen,
und dadurch, dass die Kontaktwand (43) Spitzen (7) aufweist, die von der Aufnahme (41) nach außen vorstehen, wobei die Spitzen (7) dazu bestimmt sind, den ferromagnetischen Träger (2) durch Aufprall des oder der Permanentmagneten (5) an der Kontaktseite (43) zu durchstoßen.

2. Vorrichtung (1) nach Anspruch 1, **dadurch gekennzeichnet, dass** die Bodenwand (42) des Gehäuses (4) magnetisch ist und die Haltemittel (9) des oder der Permanentmagneten (5) bildet.

3. Vorrichtung (1) nach Anspruch 1 oder Anspruch 2, **dadurch gekennzeichnet, dass** die Kontaktwand (43) nichtmagnetisch ist.

4. Vorrichtung (1) nach einem der vorstehenden Ansprüche, **dadurch gekennzeichnet, dass** das Gehäuse (4) zwei Aufnahmen (41) umfasst, wobei in jeder Aufnahme (41) mindestens ein Permanentmagnet (5) vorhanden ist.

5. Vorrichtung (1) nach einem der vorstehenden Ansprüche, **dadurch gekennzeichnet, dass** das Gehäuse (4) Mittel (46) zum Einstellen eines Verschiebeweges des oder der Permanentmagneten (1) umfasst.

6. Vorrichtung (1) nach einem der vorstehenden Ansprüche, **dadurch gekennzeichnet, dass** der oder die Permanentmagneten (5) mindestens zwei Scheiben (51) aus magnetischen Materialien umfassen, die übereinander angeordnet und in einem Schlitten (52) montiert sind.

7. Vorrichtung (1) nach dem vorstehenden Anspruch, **dadurch gekennzeichnet, dass** der Schlitten (52) eine Bohrung (522) aufweist, die dazu bestimmt ist, mit fest mit dem Gehäuse (4) verbundenen Führungsmitteln (45) zusammenzuwirken.

8. Vorrichtung (1) nach dem vorstehenden Anspruch, **dadurch gekennzeichnet, dass** die Führungsmittel (45) die Form eines Zylinders aufweisen, der von der Bodenwand (42) im Inneren der Aufnahme(n) (41) vorsteht.

9. Vorrichtung (1) nach einem der vorstehenden Ansprüche, **dadurch gekennzeichnet, dass** das Gehäuse (4) elektrische Verbindungsmittel (10) beinhaltet, um die Spitzen (7) mit dem Element (3) zu verbinden.

10. Vorrichtung (1) nach einem der vorstehenden Ansprüche, **dadurch gekennzeichnet, dass** das Gehäuse (4) Mittel zum Einpressen (61) einer Handhabungsstange umfasst.

11. Vorrichtung (1) nach dem vorstehenden Anspruch, **dadurch gekennzeichnet, dass** das Gehäuse (4) eine Verlängerung (48) aufweist, die sich von der Bodenwand (42) gegenüber der Kontaktwand (43) erstreckt, wobei die Einpressmittel (61) fest mit der Verlängerung (48) verbunden sind.

## Claims

1. A device (1) for mechanical and/or electrical connection by magnetic effect between a ferromagnetic support (2) and an element (3) to be linked to the ferromagnetic support (2), the device (1) comprising:
- at least one permanent magnet (5);
- a case (4) carrying the element (3) and housing the permanent magnet(s) (5);
the case (4) including at least one housing (41) extending between a bottom wall (42) and a contact wall (43) intended to come into contact with the ferromagnetic support (2),
the permanent magnet(s) (5) being movable in translation in the housing(s) (41) between the bottom wall (42) and the contact wall (43), the case (4) comprising means (9) for retaining the permanent magnet(s) (5) against the bottom wall (42), **characterised in that** the retaining means (9) have a magnetic attraction of the permanent magnet(s) (5), to release the permanent magnet(s) (5) by magnetic attraction of the permanent magnet(s) (5) by the ferromagnetic support (2),
and **in that** the contact wall (43) has needles (7) protruding outwardly from the housing (41), the needles (7) being intended to perforate the ferromagnetic support (2) by impact of the permanent magnet(s) (5) on the contact face (43).

2. The device (1) according to claim 1, **characterised in that** the bottom wall (42) of the case (4) is magnetic and forms the means (9) for retaining the permanent magnet(s) (5).

3. The device (1) according to claim 1 or claim 2, **characterised in that** the contact wall (43) is non-magnetic.

4. The device (1) according to any one of the preceding claims, **characterized in that** the case (4) comprises two housings (41), at least one permanent magnet (5) being present in each housing (41).

5. The device (1) according to any one of the preceding claims, **characterised in that** the case (4) comprises means (46) for adjusting a translational travel of the permanent magnet(s) (1).

6. The device (1) according to any one of the preceding claims, **characterised in that** the permanent magnet(s) (5) comprise at least two discs (51) made of magnetic materials superimposed on each other and mounted in a slider (52).

7. The device (1) according to the preceding claim, **characterised in that** the slider (52) has a bore (522) intended to cooperate with guide means (45) integral with the case (4).

8. The device (1) according to the preceding claim, **characterised in that** the guide means (45) are in the form of a cylinder protruding from the bottom wall (42) inside the housing(s) (41).

9. The device (1) according to any one of the preceding claims, **characterised in that** the case (4) incorporates electrical connection means (10) for connecting the needles (7) to the element (3).

10. The device (1) according to any one of the preceding claims, **characterised in that** the case (4) comprises means (61) for fitting a handling pole.

11. The device (1) according to the preceding claim, **characterised in that** the case (4) has an extension (48) extending from the bottom wall (42) opposite the contact wall (43), the fitting means (61) being integral with the extension (48).
